# EUROPEAN PATENT SPECIFICATION

(11) **EP 1 316 258 B1**
(45) Date of publication and mention of the grant of the patent: **21.06.2006**
(21) Application number: 01947470.9
(22) Date of filing: 06.07.2001
(51) Int. Cl.: A23B 4/24, A23L 3/358, A22C 25/00

(54) **DEVICE FOR OBTAINING OZONIZED SALTWATER TO BE USED AS REFRIGERATING AND GERMICIDAL MEANS OF FISHERY PRODUCTS**
VORRICHTUNG ZUR ERHALTUNG VON OZONISIERTEM SALZWASSER ZUM KUEHLEN UND KEIMABTOETEN VON FISCHPRODUKTEN
EQUIPEMENT PERMETTANT D'OBTENIR DE L'EAU SALUBRE OZONISEE POUVANT ETRE UTILISEE COMME REFRIGERANT ET GERMICIDE DE PRODUITS DE PECHE

(30) Priority: 07.07.2000 ES 200001690
(43) Date of publication of application: 04.06.2003
(73) Proprietor: Taboada Presedo, Jesus Manuel, Vigo, 36201 Pontevedra (ES)
(72) Inventor: Taboada Presedo, Jesus Manuel, Vigo, 36201 Pontevedra (ES)
(74) Representative: Maldonado Jordan, Julia
(86) International application number: PCT/ES2001/000268
(87) International publication number: WO 2002/007526

(56) References cited:
- US-A- 5 858 430
- PATENT ABSTRACTS OF JAPAN & JP 56 106 547 A (KANEKIYUU KK) 24 August 1981
- PATENT ABSTRACTS OF JAPAN & JP 09 105 569 A (SANYO ELECTRIC CO LTD) 22 April 1997
- PATENT ABSTRACTS OF JAPAN & JP 10 185 375 A (KOBE STEEL LTD; NIKKON SUISAN: KK) 14 July 1998
- PATENT ABSTRACTS OF JAPAN & JP 02 145 178 A (TAKANO KAZUKIYO) 04 June 1990
- PATENT ABSTRACTS OF JAPAN & JP 05 056 730 A (MITSUBISHI HEAVY IND LTD) 09 March 1993

## Description

### OBJECT OF THE INVENTION

This invention concerns equipment that has been designed specifically to produce ozonised saline water that can be used as a means for sterilising, to be specific as a germicide, because it can be applied in the form of liquid ice or flakes of ice for storing fishing products, to conserve them in a fresh state.

Therefore the facilities that are advocated are particularly suitable for use in the fishing and refrigerating industry, with a view to keeping fish fresh on the fishing vessels until the products are unloaded at the fishing port.

### BACKGROUND TO THE INVENTION

As it is well known, the fish are generally inserted in boxes that are filled with crushed ice - generally in the form of flakes - on the fishing vessels, whose ultimate aim is to keep the fish suitably refrigerated, so that it reaches the harbour in an acceptable state.

When the ice is manufactured - and this process usually takes place on the vessel itself -, fresh water is sometimes used, and at times seawater is used, whereas on occasions fresh water is used that has been suitably salted by the addition of sodium chloride tablets.

In the first of these cases, that is to say, when fresh water is used, the ice that forms at temperatures ranging from -8 °C to -11 °C, thaws around the fish when the ice comes into contact with the product, because the latter's temperature depends on the temperature of the seawater; this phenomenon causes a hollow or gap to appear between the fish and the ice, often referred to as a "cavity", in such a way that as the ice and the fish do not remain in permanent and complete contact, the temperature of the latter drops and the oxidation process sets in as it comes into contact with the air.

In the second case, that is to say, when seawater is used, as the ice comes into contact with the fish, it freezes the top layer of the product, and this means that the fish loses its fresh appearance when it comes to being sold.

The best of the three solutions is the third one, i.e. using fresh water, salted by adding sodium chloride tablets. However, in this case the salinity of the water is not suitably controlled, which means that the crushed ice is sometimes more or less salty or fresh, depending on the level of sodium chloride concentration in the water, and these levels are not generally in keeping with the variations required by the different species of fish that have to be conserved.

Furthermore, when the fish is being conserved in a refrigerated state, the following products are used to prevent bacteria and micro-organisms from spreading in the fish: benzoic acid, sodium benzoate, fumaric acid, chloramine compounds, sodium hypochlorite, carbon dioxide, hydrogen peroxide, calcium propianate, disodium phosphate, as well as antibiotics such as chlortetracycline, oxytetracycline, chloramphenicol and penicillin. The legislation currently in force in many countries prohibits the use of many of these components, and it is often the case that the results that are obtained from them do not warrant their use. Furthermore, the fact that they are very expensive makes their use prohibitive.

As a relevant background, it should be cited JP 10-1853 75-A, which consists of a device wherein ozone containing ice is manufactured. The Japanese patent performs the sterilisation with the ozone itself whereby the ozone is produced electrolytically in the water to be frozen.

### DESCRIPTION OF THE INVENTION

The facilities that are proposed in the invention constitute a completely satisfactory solution to the aforementioned problem, overcoming both of the aspects that have been explained, making it possible on the one hand, to obtain ice whose degree of salinity is perfectly suited to the species of fish that have to be conserved and, on the other hand, to obtain germicide properties that prevent bacteria and micro-organisms from spreading in the fish.

With a view to this and to be more specific, this invention begins by using, on the one hand, salt water from the sea and, on the other hand, fresh water, duly stored in a tank for that specific purpose, in such a way that these two different types of water can be pumped to a homogenising tank, through a series of needle valves and one blending valve, in such a way that they arrive in the right proportions. The homogenising tank itself is also supplied by an ozone generator, assisted by an air drier, and this feeds the tank by means of an ejector, which enables the tank to extract saline water that is ozonised to levels ranging from 750 to 900 millivolts redox, which, in turn, will be supplied to the machines that produce the flakes of ice and also to the liquid ice machine, ozonised salt liquid ice eventually being obtained.

A conductometer, which is located at the outlet of the homogenising tank, will use a salinity cell to measure the characteristics of the saline water, and will guarantee that these characteristics are kept at the most suitable levels, on the basis of the species of fish that have to be conserved. The conductometer acts upon the blending valve that mixes the salt water and the fresh water; that is to say, it suitably modifies the proportions thereof, so that the outflowing blend is as required.

### DESCRIPTION OF THE DRAWINGS

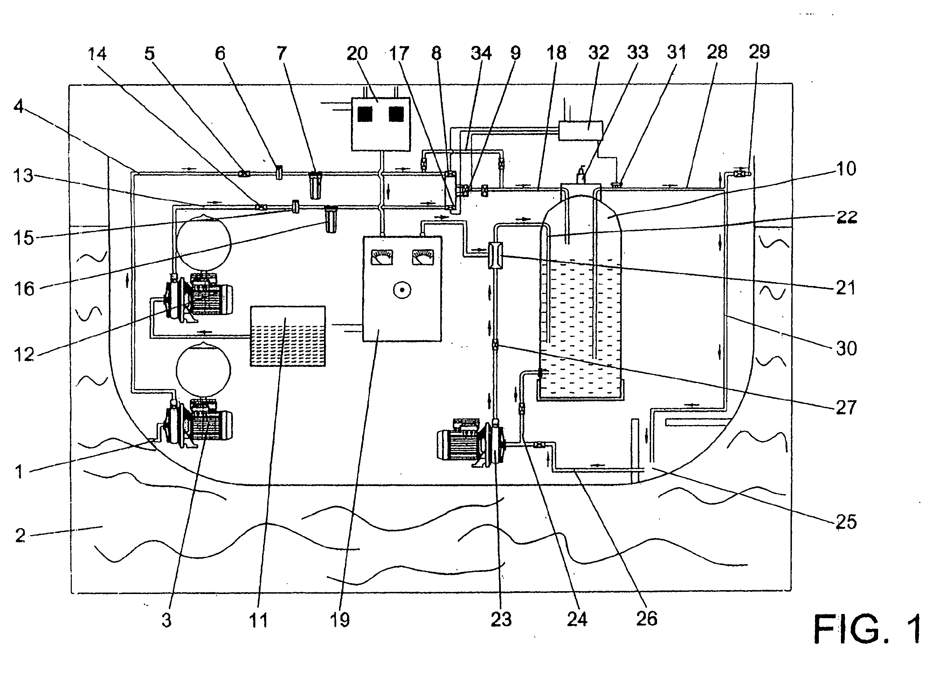

With a view to illustrating the description that is being given and in order to help to make it easier to understand the characteristics of the invention, a practical example of the system is provided, consisting of one single page containing plans, and this is enclosed as an integral part of the aforementioned description. For illustration purposes, the diagram show a sketch in elevation form - in one single figure that is in no way limiting in nature -, which shows the installations to be used to obtain the ozonised saline water with a view to serving as a means for refrigeration and as a germicide for fish products; the diagrams for these installations have been provided with a view to presenting the invention as it is to be located in the fishing vessel itself.

### PREFERRED EMBODIMENT OF THE INVENTION

It can be seen from observing this figure that the installations that are advocated start from a salt water intake (1), and that this salt water is taken directly from the sea (2) with the aid of a pump (3) that drives it in through a pipe (4) which is equipped with a needle valve (5) and a valve (6) that is calibrated to operate at a specific work pressure, for example 2 Kg/cm², and a filter (7) and a blending valve (8) and (17), and the aforementioned pipe leads it to a homogenising tank (10), into which the fresh water also flows from another tank (11), from which it is extracted by means of a pump (12) so that it flows through a pipe (13) that is also equipped with a needle valve (14), a calibrated valve (15) and a filter (16), as well as the same blending valve (8) and (17) where it meets the salt water pipe (4) flows. It eventually reaches the homogenising tank (10) through one single pipe (18).

An ozone generator (19) that is supplied by an air drier (20), also form part of the equipment. The ozone generator (19) feeds the ozone to the homogenising tank (10) through the respective pipe (22) with the aid of an ejector (21), and it does so in such a way that the correct proportions are guaranteed. A recirculation pump (23) operates in conjunction with the ejector (21), and the former either takes the blend from the homogenising tank (10) through the pipe (24), or from the liquid ice tank (25) through another pipe (26), which meets the other one, pumping the water or the liquid ice to the aforementioned ejector (21), via a control valve (27).

An outlet pipe (28) runs from the homogenising tank (10), and then splits into two branches, the first one of which is a service branch (29) and the second branch (30) leads to the aforementioned liquid ice tank (25), and a salinity cell (31) is located in the outlet pipe (28); this cell controls the level of salinity in the blend and sends the signals to a conductometer (32), which uses the blending valve (8) and (17) to control the proportions of fresh water and salt water in the homogenising tank (10).

The structure described above, is supplemented with a degasser (33) that is mounted at the top of the homogenising tank (10), as well as a by-pass (34) for saline water / ice.

## Claims

1. Facilities installed for the purpose of obtaining ozonised saline water that can be used to refrigerate fish products and to serve as a germicide, specifically for obtaining water to be used in forming liquid ice or ice in the form of flakes that, when applied to the fish improves the conditions in which the product is kept cold, **characterised by** the fact that it uses sea water (2) and a tank of fresh water (11), preferably located on the fishing vessel itself, contains a pair of pressure units (3) and (12), which drive the salt water and fresh water to a blending valve (8) and (17) that feeds a homogenising tank (10) from which saline water for service (29) is obtained, with the desired level of salinity, the installations are also equipped with an ozone generator (19), preferably assisted with an air drier (20), which supplies the homogenising tank (10) with the ozone by means of an ejector (21).

2. Facilities installed for the purpose of obtaining ozonised saline water that can be used to refrigerate fish products and to serve as a germicide, in accordance with claim 1 above, **characterised by** the fact that each one of the pipes that serve the respective water pressure units (3 - 12) with the blending valve (8) and (17) is equipped with a needle valve (5 - 14), a pressure control valve (6 - 15), a filter (7 - 16) and a flow control valve (8 - 17), it being envisaged that the flow control valve (8 - 17) be controlled by a conductometer (32), which detects the salinity level in the outlet pipe (28) for the saline water to service (29), with the aid of a salinity cell (31).

3. Facilities installed for the purpose of obtaining ozonised saline water that can be used to refrigerate fish products and to serve as a germicide, in accordance with the preceding claims, **characterised by** the fact that the saline and ozonised water feeds the liquid ice tank (25) and, with the aid of a pressure unit (23), recirculation takes place through the homogenising tank (10), either taking water from this tank by means of a lower pipe (24), and/or taking it from the liquid ice tank (25) and making it flow through a control valve (27) with the aid of the ejector (21), where it is mixed with the ozone that comes from the generator (19).

## Patentansprüche

1. Eingerichtete Anlage für den Zweck der Erzielung von ozonisiertem Salzwasser, das für den Einsatz zur Kühlung von Fischprodukten und als Desinfektionsmittel verwendet werden kann, insbesondere zur Erzielung von Wasser, das zur Herstellung von Flüssigeis oder Flockeneis verwendet wird, das bei Anwendung auf den Fisch die Bedingungen verbessert, unter denen das Produkt kühl gehalten wird, die sich durch die Tatsache kennzeichnet, dass sie Meerwasser (2) und einen Frischwassertank (11) verwendet, sich vorzugsweise auf dem Fischereifahrzeug selbst befindet und zwei Druckeinheiten (3) und (12) aufweist, die das Salzwasser und das Frischwasser zu einem Mischventil (8) und (17) leiten, das einen Homogenisierungstank (10) speist, aus dem das Salzwasser für den Betrieb (29) mit dem gewünschten Salzgehalt erzielt wird; die Anlage ist auch mit einem Ozongenerator (19) ausgestattet, der vorzugsweise von einem Lufttrockner (20) unterstützt wird, der den Homogenisierungstank (10) durch eine Strahlpumpe (21) mit dem Ozon versorgt.

2. Eingerichtete Anlage für den Zweck der Erzielung von ozonisiertem Salzwasser, das für den Einsatz zur Kühlung von Fischprodukten und als Desinfektionsmittel verwendet werden kann, entsprechend Patentanspruch 1 oben, die sich durch die Tatsache kennzeichnet, dass jede der Leitungen, die die jeweiligen Wasserdruckeinheiten (3 - 12) mit dem Mischventil (8) und (17) beliefert, mit einem Nadelventil (5 - 14), einem Drucksteuerventil (6 - 15), einem Filter (7 - 16) und einem Durchflusssteuerventil (8 - 17) ausgestattet ist, wobei geplant ist, dass das Durchflusssteuerventil (8 - 17) durch ein Leitfähigkeitsmessgerät (32) kontrolliert wird, das mit Hilfe einer Salzhaltigkeitszelle (31) den Salzgehalt in der Auslassleitung (28) für das zu verwendende Salzwasser (29) feststellt.

3. Eingerichtete Anlage für den Zweck der Erzielung von ozonisiertem Salzwasser, das für den Einsatz zur Kühlung von Fischprodukten und als Desinfektionsmittel verwendet werden kann, entsprechend den vorigen Patentansprüchen, die sich durch die Tatsache kennzeichnet, dass das ozonisierte Salzwasser den Flüssigeistank (25) speist und mit Hilfe einer Druckeinheit (23) im Homogenisierungstank (10) eine Umwälzung stattfindet, wobei entweder durch eine niedrigere Leitung (24) Wasser aus diesem Tank genommen und/oder dieses aus dem Flüssigeistank (25) genommen und mit Hilfe der Strahlpumpe (21) durch ein Steuerventil (27) geleitet wird, wo es mit dem aus dem Generator (19) kommenden Ozon gemischt wird.

## Revendications

1. Installations mises en place dans le but d'obtenir de l'eau saline ozonisée pouvant être utilisée pour réfrigérer des produits de pêche et pour servir de germicide, spécifiquement pour obtenir de l'eau à utiliser dans la formation de glace liquide ou de glace sous forme d'écailles qui, lorsqu'elles sont appliquées sur le poisson, améliorent les conditions dans lesquelles le produit est conservé froid, **caractérisées par le fait qu'**elles utilisent de l'eau de mer (2) et un réservoir d'eau fraîche (11), qu'elles sont placées de préférence dans le bateau de pêche lui-même, qu'elles contiennent deux unités de pression (3) et (12), qui conduisent l'eau salée et l'eau fraîche vers un robinet de mélange (8) et (17) qui alimente un réservoir d'homogénéisation (10) à partir duquel on obtient de l'eau saline pour le service (29) avec le degré voulu de salinité ; les installations sont également équipées d'un générateur d'ozone (19), de préférence assisté d'un sécheur d'air (20) qui fournit l'ozone au réservoir d'homogénéisation (10) au moyen d'un éjecteur (21).

2. Installations mises en place dans le but d'obtenir de l'eau saline ozonisée pouvant être utilisée pour réfrigérer des produits de pêche et pour servir de germicide, conformément à la revendication 1 ci-dessus, **caractérisées par le fait que** chacun des tuyaux qui dessert les unités de pression d'eau respectives (3 - 12) avec le robinet de mélange (8) et (17) est équipé d'un robinet à aiguille (5 - 14), d'une vanne de régulation de pression (6 - 15), d'un filtre (7 - 16) et d'une vanne de régulation de débit (8 - 17), étant envisagé que la vanne de régulation de débit (8 - 17) soit régulée par un conductimètre (32), qui détecte le niveau de salinité dans le tuyau de sortie (28) de l'eau saline destinée au service (29) à l'aide d'une cellule de salinité (31).

3. Installations mises en place dans le but d'obtenir de l'eau saline ozonisée pouvant être utilisée pour réfrigérer des produits de pêche et pour servir de germicide, conformément aux revendications ci-dessus, **caractérisées par le fait que** l'eau saline et ozonisée alimente le réservoir de glace liquide (25) et, à l'aide d'une unité de pression (23), la recirculation a lieu au travers du réservoir d'homogénéisation (10), soit en prenant l'eau dans ce réservoir au moyen d'un tuyau plus bas (24) et/ou en la prenant dans le réservoir de glace liquide (25) et en la faisant s'écouler à travers une vanne de régulation (27) à l'aide de l'éjecteur (21), où elle est mélangée avec l'ozone qui provient du générateur (19).
